# EUROPÄISCHE PATENTSCHRIFT

(11) **EP 3 048 210 B1**
(45) Veröffentlichungstag und Bekanntmachung des Hinweises auf die Patenterteilung: **03.01.2018**
(21) Anmeldenummer: 16152796.5
(22) Anmeldetag: 26.01.2016
(51) Int. Cl.: E04B 1/86, F24D 3/12, E04F 15/02, E04F 15/20, E04F 21/00, E04B 1/74

(54) **SCHALLDÄMMPLATTE**
NOISE ATTENUATION PANEL
PANNEAU D'ISOLATION ACOUSTIQUE

(30) Priorität: 26.01.2015 DE 202015100349 U
(43) Veröffentlichungstag der Anmeldung: 27.07.2016
(73) Patentinhaber: Bau-Fritz GmbH & Co. KG seit 1896, 87746 Erkheim (DE)
(72) Erfinder: Reisacher, Mario, 87746 Erkheim (DE)
(74) Vertreter: Pfister & Pfister Patent- und Rechtsanwälte

(56) Entgegenhaltungen:
- DE-A1- 19 700 373
- DE-U1- 7 920 480

## Beschreibung

Die Erfindung betrifft eine Schalldämmplatte, einen Fußboden mit einer solchen Schalldämmplatte, eine Wand mit einer solchen Schalldämmplatte, einen Raum mit einem solchen Fußboden und/oder einer solchen Wand sowie ein Gebäude mit einem solchen Raum.

Schalldämmplatten können beispielsweise als Trittschalldämmplatten in Fußböden verwendet werden. Damit kann übermäßiger Geräuschentwicklung beim Laufen auf dem Fußboden vorgebeugt werden. Ebenso können Schalldämmplatten verwendet werden, um eine Wand gegen das Durchdringen von Schall zu isolieren. Damit kann beispielsweise eine Belästigung von Personen, welche sich in Nachbarzimmern befinden, vermieden werden.

Es hat sich herausgestellt, dass gattungsgemäße Schalldämmplatten schwer zu verlegen sind, weil zum Zuschneiden der Schalldämmplatten schweres und sperriges Werkzeug wie beispielsweise eine Kreissäge nötig ist. Dies erhöht die Kosten beim Einsatz solcher Schalldämmplatten erheblich.

Das Dokument DE 79 20 480 U1 offenbart ein Halbzeug aus mit Kunstharz gebundenen Mineralfasern, insbesondere für wärmedämmende oder schallabsorbierende Verkleidungen, das mehrere Reiß-Trennlinien aufweist. Das Halbzeug ist dabei als eine im Wesentlichen biegesteife Platte ausgebildet, die durch die Reiß-Trennlinien in eine Vielzahl von im Verhältnis zur Plattengröße kleinen Abschnitten unterteilt ist.

Es ist deshalb eine Aufgabe der Erfindung, eine Schalldämmplatte bereitzustellen, welche beispielsweise hinsichtlich ihrer Anpassbarkeit an bauliche Gegebenheiten verbessert ist. Es sind des Weiteren Aufgaben der Erfindung, einen Fußboden und eine Wand mit einer solchen Schalldämmplatte bereitzustellen sowie einen Raum mit einem solchen Fußboden und/oder einer solchen Wand und ferner ein Gebäude mit einem solchen Raum bereitzustellen.

Dies wird erfindungsgemäß durch eine Schalldämmplatte nach Anspruch 1 sowie einen Fußboden, eine Wand, einen Raum und ein Gebäude nach den jeweils darauf gerichteten Unteransprüchen erreicht.

Die Erfindung betrifft eine Schalldämmplatte. Diese weist eine Mehrzahl von Sollbruchstellen auf, welche zum Abtrennen jeweiliger horizontal benachbarter Teile der Schalldämmplatte ausgebildet sind. Dabei ist vorgesehen, dass zumindest eine erste Sollbruchstelle einen Winkel zu einer zweiten Sollbruchstelle einnimmt, welcher größer als 0° ist, höchstens 90° beträgt.

Bei der erfindungsgemäßen Schalldämmplatte kann auf den Einsatz schwerer und sperriger Werkzeuge wie Kreissägen verzichtet werden. Mittels der Sollbruchstellen kann die Schalldämmplatte an eine Kontur eines Fußbodens oder einer Wand angepasst werden. Unter einer Sollbruchstelle wird dabei typischerweise eine Linie verstanden, entlang welcher die Schalldämmplatte in zumindest zwei Teile aufgeteilt werden kann, insbesondere ohne den Einsatz von Werkzeug oder auch nur unter Verwendung von kleinem, handlichem Werkzeug wie beispielsweise einer Schere oder einem Messer. Das Vorsehen zumindest zweier Sollbruchstellen mit der angegebenen Winkelbeziehung führt dabei zu einer besonders hohen Flexibilität beim Erreichen bestimmter Konturen, welche mit Ausführungen wie beispielsweise einer Anordnung von mehreren parallelen Sollbruchstellen nicht erreichbar ist.

Gemäß einer bevorzugten Ausführung beträgt der Winkel 90°. Damit liegen die Sollbruchstellen rechtwinklig zueinander, was eine besonders vorteilhafte Anpassung an typischerweise rechtwinklige Strukturen von Fußböden oder Wänden ermöglicht.

Bevorzugt ist die erste Sollbruchstelle gerade ausgebildet. Bevorzugt ist auch die zweite Sollbruchstelle gerade ausgebildet. Auch dies erlaubt eine vorteilhafte Anpassung an rechtwinklige Strukturen von Fußböden oder Wänden.

Gemäß einer bevorzugten Ausführung sind eine Anzahl weiterer erster Sollbruchstellen parallel zur ersten Sollbruchstelle angeordnet. Gemäß einer weiteren bevorzugten Ausführung sind eine Anzahl weiterer zweiter Sollbruchstellen parallel zur zweiten Sollbruchstelle angeordnet. Damit kann die Flexibilität beim Anpassen der Schalldämmplatte an eine bestimmte Kontur besonders vorteilhaft erhöht werden.

Gemäß einer Ausführung sind die Sollbruchstellen entsprechend einem zweidimensionalen Muster angeordnet, welches über die gesamte horizontale Ausdehnung der Schalldämmplatte identisch ist. Beispielsweise kann ein gleichmäßiges Gitter mit zwei Sätzen von Sollbruchstellen verwendet werden, wobei Sollbruchstellen eines ersten Satzes parallel zueinander ausgerichtet sind und rechtwinklig zu Sollbruchstellen eines zweiten Satzes stehen, welche ebenfalls parallel zueinander ausgerichtet sind.

Gemäß einer Ausführung sind die Sollbruchstellen entsprechend einem zweidimensionalen Muster angeordnet, bei welchem jeweilige Abstände zwischen benachbarten Sollbruchstellen eine Mehrzahl unterschiedlicher Werte annehmen. Damit kann das Muster noch flexibler an typische Einbausituationen angepasst werden, so dass bestimmte Konturen besser und/oder feiner mittels der Sollbruchstellen erreichbar sind.

Gemäß einer Ausführung sind die Sollbruchstellen entsprechend einem zweidimensionalen Muster angeordnet, bei welchem jeweilige Abstände zwischen benachbarten Sollbruchstellen zu einem oder mehreren Rändern der Schalldämmplatte hin abnehmen. Damit kann die Flexibilität beim Erreichen bestimmter Konturen insbesondere an den Rändern erhöht werden, wo typischerweise der größte Bedarf für eine Anpassung an bauliche Gegebenheiten besteht.

Gemäß einer Ausführung ist vorgesehen, dass die Sollbruchstellen entsprechend einem zweidimensionalen Muster angeordnet sind, bei welchem jeweilige Abstände zwischen benachbarten Sollbruchstellen in einer Mehrzahl von Abschnitten jeweilige unterschiedliche Werte annehmen. Innerhalb der Abschnitte können die Abstände identisch zueinander sein. Dies kann jeweils beispielsweise für Sollbruchstellen gelten, welche zueinander parallel sind, und/oder für Sollbruchstellen, welche in einem nichtverschwindenden Winkel, beispielsweise im rechten Winkel, dazu ausgerichtet sind.

Gemäß einer bevorzugten Ausführung sind die Sollbruchstellen als Kerben ausgebildet. Dies kann ein Zuschneiden der Schalldämmplatte durch einfaches Abknicken ermöglichen. Auf den Einsatz von Werkzeug kann damit vollständig verzichtet werden. Die Kerben können aber beispielsweise auch derart ausgebildet sein, dass sie mittels eines einfachen, leichten Werkzeugs wie beispielsweise einer Schere oder eines Messers ("Cutter") durchtrennt werden können.

Die Tiefe einer jeweiligen Kerbe kann beispielsweise zwischen 30 % und 95 % der Plattendichte betragen. Der untere Wert dieses Bereichs kann alternativ beispielsweise auch 40 %, 50 %, 60 %, 70 %, 80 % oder 90 % betragen. Der obere Wert kann alternativ beispielsweise auch 60 %, 70 % oder 80 % betragen. Alle Kombinationen von unterer und oberer Grenze sind Bestandteil der Offenbarung dieser Anmeldung. Die Tiefe kann auch mehr als 50 %, mehr als 60 %, mehr als 70 %, mehr als 80 % oder mehr als 90 % der Plattendichte betragen.

Die Weite einer jeweiligen Kerbe kann beispielsweise zwischen der 1 mm und 1 cm liegen. Der untere Wert dieses Bereichs kann alternativ auch beispielsweise 2 mm, 3 mm, 4 mm, 5 mm, 6 mm oder 7 mm betragen. Der obere Wert kann alternativ beispielsweise auch 6 mm, 7 mm, 8 mm oder 9 mm betragen. Alle Kombinationen von unterer und oberer Grenze sind Bestandteil der Offenbarung dieser Anmeldung. Niedrigere und höhere Werte sind gleichfalls umfasst.

Bevorzugt sind die Sollbruchstellen in die Schalldämmplatte eingeschnitten. Dies ermöglicht eine einfache Herstellung. Außerdem kann ein Material, welches an einer Sollbruchstelle verbleibt, unkomprimiert sein. Alternativ dazu können die Sollbruchstellen beispielsweise auch eingedrückt, eingepresst oder eingestanzt werden, wodurch das an der Sollbruchstelle verbleibende Material komprimiert wird.

Bevorzugt weist ein Material, welches an einer jeweiligen Sollbruchstelle zwei horizontal benachbarte Teile der Schalldämmplatte nach Art eines Steges oder einer Brücke verbindet, die gleiche Dichte auf wie Material neben der Sollbruchstelle. Weiter bevorzugt ist ein Material, welches an einer jeweiligen Sollbruchstelle zwei horizontal benachbarte Teile der Schalldämmplatte verbindet, identisch zu einem Material neben der Sollbruchstelle. Dies ermöglicht eine durchgehende und gleichmäßige Ausbildung der Schalldämmplatte.

Gemäß einer bevorzugten Ausführung ist die Schalldämmplatte aus Holzfaser ausgebildet. Dieses Material hat sich für typische Einsatzzwecke als vorteilhaft erwiesen. Es lässt sich insbesondere umweltfreundlich herstellen und entsorgen. Auch Restmaterial oder Abfallstücke können bspw. thermisch verwertet oder als Füllmaterial verwendet werden.

Bevorzugt ist die Schalldämmplatte aus einem identischen, einheitlichen Material ausgebildet. Dies ermöglicht eine einfache Herstellung und lässt die Notwendigkeit entfallen, beim Anpassen oder Zuschneiden der Schalldämmplatte auf unterschiedliche Materialien Rücksicht zu nehmen. Die Platte kann dann auch industriell aus vorgeliefertem Plattenmaterial hergestellt werden.

Erfindungsgemäß ist die Schalldämmplatte ganz oder teilweise entlang einer horizontalen Ebene trennbar ausgebildet. Damit kann nicht nur auf Ränder eines Fußbodens oder einer Wand Rücksicht genommen werden, sondern es kann auch die Höhe bzw. Dicke angepasst werden. Dies kann beispielsweise die Verlegung von Installationsrohren oder einer Fußbodenheizung erleichtern. Es sei dabei verstanden, dass die erwähnte horizontale Ebene in einer Anordnung der Schalldämmplatte tatsächlich horizontal ist, in welcher die Schalldämmplatte eben auf einer horizontalen Unterlage aufliegt. Dies entspricht beispielsweise der typischen Verwendung in einem Fußboden. Wenn die Schalldämmplatte senkrecht dazu aufgestellt wird, beispielsweise zur Montage an einer Wand, so ist auch die als horizontal bezeichnete Ebene nicht mehr horizontal, sondern vertikal ausgerichtet.

Bevorzugt weist die Schalldämmplatte in einer Anzahl horizontal trennbar ausgebildeter Abschnitte eine jeweilige auf einen Unterbau aufgelegte Platte auf, welche sich über einer horizontalen Ebene befindet, entlang welcher die Schalldämmplatte trennbar ausgebildet ist. Die weiter oben erwähnte Anpassung der Höhe bzw. Dicke kann auf diese Weise durch einfaches Abnehmen der jeweiligen Platte erfolgen.

Die Schalldämmplatte kann entlang der horizontalen Ebene geklebt oder perforiert sein. Damit kann die Platte auf dem Unterbau gehalten werden, auch wenn die Schalldämmplatte bewegt oder gekippt wird. Eine Verklebung oder Perforation kann dabei bevorzugt derart ausgebildet sein, dass sie manuell oder unter Einsatz eines leichten, handlichen Werkzeugs wie einer Schere oder eines Messers lösbar ist.

Bevorzugt sind horizontal trennbar ausgebildete Abschnitte jeweils durch eine Anzahl von Sollbruchstellen begrenzt. Dies ermöglicht eine einfache Greifmöglichkeit für eine abzunehmende Platte, insbesondere wenn die Sollbruchstellen als Kerben ausgebildet sind.

Bevorzugt ist die Schalldämmplatte flammhemmend ausgerüstet. Damit kann zusätzlich zur schalldämmenden Wirkung zusätzlich eine flammhemmende Wirkung erreicht werden.

Die Erfindung betrifft des Weiteren einen Fußboden, wobei in dem Fußboden eine erfindungsgemäße Schalldämmplatte verbaut ist. Bezüglich der Schalldämmplatte kann auf alle beschriebenen Ausführungen und Varianten zurückgegriffen werden. Erläuterte Vorteile gelten entsprechend.

Die Schalldämmplatte kann, insbesondere im Fußboden, als Trittschalldämmplatte ausgebildet sein.

Bei dem Fußboden ist die Schalldämmplatte bevorzugt unter einem Estrich oder unter einem Fußbodenaufbau verbaut. Dies hat sich als vorteilhaft erwiesen, wobei der Estrich und/oder der Fußbodenaufbau bestimmte Eigenschaften des Fußbodens erreichen können. Beispielsweise kann ein Teppich, ein Parkett oder ein anderer Fußbodenbelag Bestandteil des Fußbodens sein, womit Haptik, Optik und Strapazierfähigkeit angepasst werden können. Die Sollbruchstellen sind dabei bevorzugt nach oben und/oder unten geöffnet.

Die Erfindung betrifft des Weiteren eine Wand, wobei in der Wand eine erfindungsgemäße Schalldämmplatte verbaut ist. Bezüglich der Schalldämmplatte kann auf alle beschriebenen Ausführungen und Varianten zurückgegriffen werden. Erläuterte Vorteile gelten entsprechend.

Bei der Wand ist die Schalldämmplatte bevorzugt unter einem Wandbelag verbaut. Der Wandbelag kann dabei bestimmte gewünschte Eigenschaften, beispielsweise hinsichtlich Haptik oder Optik der Wand, erreichen.

Die Wand kann insbesondere als Installationswand ausgebildet sein. Dies ermöglicht die Aufnahme haustechnischer Installations- oder Versorgungsleitungen in der Wand. Es sei erwähnt, dass die Verlegung derartiger Leitungen insbesondere bei der oben beschriebenen Ausführung der Schalldämmplatte mit horizontaler Teilbarkeit besonders erleichtert wird.

Die Erfindung betrifft des Weiteren einen Raum, welcher einen erfindungsgemäßen Fußboden und/oder eine erfindungsgemäße Wand aufweist. Hinsichtlich des Fußbodens oder der Wand kann dabei auf alle beschriebenen Ausführungen und Varianten zurückgegriffen werden. Erläuterte Vorteile gelten entsprechend.

Die Erfindung betrifft des Weiteren ein Gebäude, welches zumindest einen erfindungsgemäßen Raum aufweist. Hinsichtlich des Raums kann dabei auf alle beschriebenen Ausführungen und Varianten zurückgegriffen werden. Erläuterte Vorteile gelten entsprechend.

Des Weiteren umfasst die Erfindung auch die Verwendung einer Schalldämmplatte für den Zweck des Dämmens von Trittschall, insbesondere an einem Fußboden, oder für das Dämmen von Schall an einer Wand.

In der Zeichnung ist die Erfindung insbesondere in einem Ausführungsbeispiel schematisch dargestellt. Es zeigen:
- Fig. 1:: Eine Draufsicht auf eine Schalldämmplatte, und
- Fig. 2:: Eine Seitenansicht eines Teils der Schalldämmplatte von Fig. 1.

In den Figuren sind gleiche oder einander entsprechende Elemente jeweils mit den gleichen Bezugszeichen bezeichnet und werden daher, sofern nicht zweckmäßig, nicht erneut beschrieben. Die in der gesamten Beschreibung enthaltenen Offenbarungen sind sinngemäß auf gleiche Teile mit gleichen Bezugszeichen bzw. gleichen Bauteilbezeichnungen übertragbar. Auch sind die in der Beschreibung gewählten Lageangaben, wie z.B. oben, unten, seitlich usw. auf die unmittelbar beschriebene sowie dargestellte Figur bezogen und sind bei einer Lageänderung sinngemäß auf die neue Lage zu übertragen. Weiterhin können auch Einzelmerkmale oder Merkmalskombinationen aus den gezeigten und beschriebenen unterschiedlichen Ausführungsbeispielen für sich eigenständige, erfinderische oder erfindungsgemäße Lösungen darstellen.

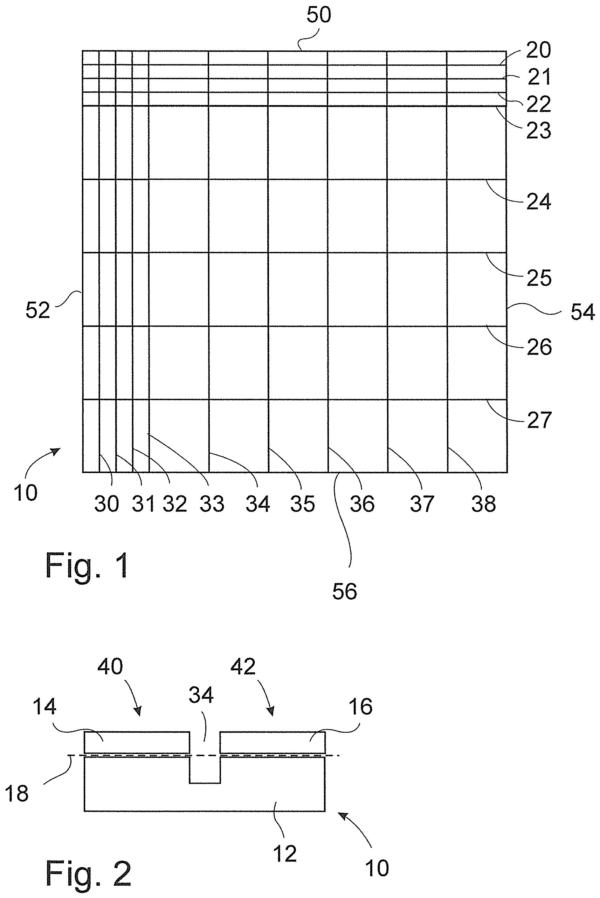

Figur 1 zeigt schematisch eine Draufsicht auf eine Schalldämmplatte 10. Die Schalldämmplatte 10 ist vorliegend aus Holzfaser ausgebildet. Dabei handelt es sich um ein Material, welches sich für Schalldämmplatten als vorteilhaft herausgestellt hat.

Die Schalldämmplatte 10 weist eine erste Sollbruchstelle 20 und eine zweite Sollbruchstelle 30 auf. Die beiden Sollbruchstellen 20, 30 sind wie gezeigt rechtwinklig zueinander angeordnet.

Parallel zur ersten Sollbruchstelle 20 sind weitere erste Sollbruchstellen 21, 22, 23, 24, 25, 26 und 27 angeordnet. Ebenso sind parallel zur zweiten Sollbruchstelle 30 weitere zweite Sollbruchstellen 31, 32, 33, 34, 35, 36, 37 und 38 angeordnet. Somit ergibt sich insgesamt ein zweidimensionales Muster an Sollbruchstellen.

Entlang einer jeweiligen Sollbruchstelle kann die Schalldämmplatte 10 durch manuelles Abknicken in ihrer Kontur verändert werden. Insbesondere kann sie entlang einer jeweiligen Sollbruchstelle durch Abknicken in zwei Teile zerlegt werden. Dies ermöglicht es beispielsweise, einen kleineren ganzseitigen Teil abzuknicken, so dass ein größerer Hauptteil mit gewünschter Kontur übrig bleibt.

Wie in Figur 1 zu sehen ist haben die Sollbruchstellen unterschiedliche Abstände voneinander. Die ersten Sollbruchstellen 20, 21, 22 und 23, welche benachbart zu einen erste Rand 50 der Schalldämmplatte 10 angeordnet sind, haben einen geringeren Abstand voneinander als die ersten Sollbruchstellen 24, 25, 26 und 27, welche einen größeren Abstand von den erste Rand 50 haben. Bis zu einem dem ersten Rand 50 gegenüberliegenden vierten Rand 56 bleibt der Abstand dieser ersten Sollbruchstellen 24, 25, 26 und 27 konstant. Ebenso haben die zweiten Sollbruchstellen 30, 31, 32 und 33, welche benachbart zu einem zweiten Rand der Schalldämmplatte 10 angeordnet sind, einen geringeren Abstand voneinander als die zweiten Sollbruchstellen 34, 35, 36, 37 und 38, welche einen größeren Abstand von dem zweiten Rand 52 haben. Bis zu einem dem zweiten Rand 52 gegenüberliegenden dritten Rand 54 bleibt der Abstand dieser zweiten Sollbruchstellen 34, 35, 36, 37 und 38 konstant. Wie gezeigt entspricht vorliegend der Abstand einer randseitigen Sollbruchstelle zum nächsten Rand ihrem Abstand zur benachbarten Sollbruchstelle.

Die beschriebene Strukturierung der Schalldämmplatte 10 führt dazu, dass unterschiedliche Bereiche der Schalldämmplatte 10 mittels der Sollbruchstellen unterschiedlich fein strukturierbar sind. Eine besonders feine Strukturierbarkeit besteht in der linken oberen Ecke, wo die Sollbruchstellen in beiden Richtungen nur geringe Abstände voneinander haben. Unterhalb und rechts von diesem Bereich besteht eine feine Strukturierbarkeit in einer Richtung und eine gröbere Strukturierbarkeit in der dazu senkrechten Richtung. Der größte Teil der Schalldämmplatte 10, welcher sich rechts der zweiten Sollbruchstelle 33 und unterhalb der ersten Sollbruchstelle 23 befindet, ist in beiden Richtungen nur grob strukturierbar.

Die Ausbildung der Sollbruchstellen wird nun beispielhaft an der zweite Sollbruchstelle 34 mit Bezug auf Figur 2 beschrieben werden. Dabei ist zu erkennen, dass die zweite Sollbruchstelle 34 als Einkerbung in der Schalldämmplatte 10 ausgebildet ist. Diese Einkerbung ist in die Schalldämmplatte 10 eingeschnitten, so dass verbleibendes Material der Schalldämmplatte 10 unterhalb der zweiten Sollbruchstelle 34 identisch und insbesondere auch identisch dicht ist zu umgebendem Material der Schalldämmplatte 10.

Es ist einfach zu erkennen, dass die Schalldämmplatte 10 entlang der zweite Sollbruchstelle 34, wie sie in Figur 2 dargestellt ist, manuell abgeknickt und damit die Verbindung gebrochen werden kann. Dies ermöglicht eine Aufteilung der Schalldämmplatte 10 in zwei voneinander unabhängige Teile.

Des Weiteren ist in Figur 2 dargestellt, dass die Schalldämmplatte 10 horizontalen trennbar ausgebildet ist. Die Schalldämmplatte 10 weist hierzu einen Unterbau 12 auf, welcher sich bis zu einer horizontalen Ebene 18 erstreckt. Oberhalb der horizontalen Ebene 18 ist linksseitig der zweiten Sollbruchstelle 34 eine erste Platte 14 angeordnet. Rechtsseitig der zweiten Sollbruchstelle 34 ist eine zweite Platte 16 angeordnet. Die beiden Platten 14, 16 sind auf den Unterbau 12 aufgelegt und mit diesem leicht verklebt. Die Verklebung ist dabei derart ausgeführt, dass ein manuelles Abnehmen der Platten 14, 16 von dem Unterbau 12 ohne große Kraftanstrengung und ohne Zuhilfenahme eines Werkzeugs möglich ist. Hierdurch ergeben sich ein erster horizontal trennbar ausgebildeter Abschnitt 40 und ein zweiter horizontal trennbar ausgebildeter Abschnitt 42.

Durch die eben beschriebene horizontale Trennbarkeit der Schalldämmplatte 10 wird eine Anpassung auch der Höhe der Schalldämmplatte 10 ermöglicht. Damit kann beispielsweise selektiv Platz für Installationsleitungen oder eine Fußbodenheizung geschaffen werden, wodurch die Verlegung derartiger Leitungen oder Einrichtungen deutlich erleichtert wird.

Es sei verstanden, dass Figur 2 lediglich eine Seitenansicht eines Ausschnitts der Schalldämmplatte 10 zeigt. Links und rechts davon wird die Schalldämmplatte 10 entsprechend fortgesetzt. Ähnliches gilt für eine um 90° verdrehte Ansicht. Die Ausführungen zu Figur 2 sind entsprechend anwendbar.

Nachfolgend werden mögliche Merkmale des Vorschlages strukturiert wiedergegeben. Die nachfolgenden strukturiert wiedergegebenen Merkmale können beliebig untereinander kombiniert werden und können in beliebiger Kombination in die Ansprüche der Anmeldung aufgenommen werden. Dem Fachmann ist klar, dass sich die Erfindung bereits aus dem Gegenstand mit den wenigsten Merkmalen ergibt. Insbesondere sind nachfolgend vorteilhafte oder mögliche Ausgestaltungen, nicht jedoch die einzig möglichen Ausgestaltungen der Erfindung wiedergegeben.

Die Erfindung umfasst:
Eine Schalldämmplatte, aufweisend eine Mehrzahl von Sollbruchstellen, welche zum Abtrennen jeweiliger horizontal benachbarter Teile der Schalldämmplatte ausgebildet sind, wobei zumindest eine erste Sollbruchstelle einen Winkel zu einer zweiten Sollbruchstelle einnimmt, welcher größer als 0° ist, höchstens 90° beträgt.

Eine wie zuvor ausgeführte Schalldämmplatte, wobei der Winkel 90° beträgt.

Eine wie zuvor ausgeführte Schalldämmplatte, wobei die erste Sollbruchstelle gerade ausgebildet ist.

Eine wie zuvor ausgeführte Schalldämmplatte, wobei die zweite Sollbruchstelle gerade ausgebildet ist.

Eine wie zuvor ausgeführte Schalldämmplatte, wobei eine Anzahl weiterer erster Sollbruchstellen parallel zur ersten Sollbruchstelle angeordnet sind.

Eine wie zuvor ausgeführte Schalldämmplatte, wobei eine Anzahl weiterer zweiter Sollbruchstellen parallel zur zweiten Sollbruchstelle angeordnet sind.

Eine wie zuvor ausgeführte Schalldämmplatte, wobei die Sollbruchstellen entsprechend einem zweidimensionalen Muster angeordnet sind, welches über die gesamte horizontale Ausdehnung der Schalldämmplatte identisch ist.

Eine wie zuvor ausgeführte Schalldämmplatte, wobei die Sollbruchstellen entsprechend einem zweidimensionalen Muster angeordnet sind, bei welchem jeweilige Abstände zwischen benachbarten Sollbruchstellen eine Mehrzahl unterschiedlicher Werte annehmen.

Eine wie zuvor ausgeführte Schalldämmplatte, wobei die Sollbruchstellen entsprechend einem zweidimensionalen Muster angeordnet sind, bei welchem jeweilige Abstände zwischen benachbarten Sollbruchstellen zu einem oder mehreren Rändern der Schalldämmplatte hin abnehmen.

Eine wie zuvor ausgeführte Schalldämmplatte, wobei die Sollbruchstellen entsprechend einem zweidimensionalen Muster angeordnet sind, bei welchem jeweilige Abstände zwischen benachbarten Sollbruchstellen in einer Mehrzahl von Abschnitten jeweilige unterschiedliche Werte annehmen.

Eine wie zuvor ausgeführte Schalldämmplatte, wobei die Sollbruchstellen als Kerben ausgebildet sind.

Eine wie zuvor ausgeführte Schalldämmplatte, wobei die Sollbruchstellen in die Schalldämmplatte eingeschnitten sind.

Eine wie zuvor ausgeführte Schalldämmplatte, wobei ein Material, welches an einer jeweiligen Sollbruchstelle zwei horizontal benachbarte Teile der Schalldämmplatte verbindet, die gleiche Dichte aufweist wie Material neben der Sollbruchstelle.

Eine wie zuvor ausgeführte Schalldämmplatte, wobei ein Material, welches an einer jeweiligen Sollbruchstelle zwei horizontal benachbarte Teile der Schalldämmplatte verbindet, identisch ist zu einem Material neben der Sollbruchstelle.

Eine wie zuvor ausgeführte Schalldämmplatte, wobei die Schalldämmplatte aus Holzfaser ausgebildet ist.

Eine wie zuvor ausgeführte Schalldämmplatte, wobei die Schalldämmplatte aus einem identischen, einheitlichen Material ausgebildet ist.

Eine wie zuvor ausgeführte Schalldämmplatte, wobei die Schalldämmplatte ganz oder teilweise entlang einer horizontalen Ebene trennbar ausgebildet ist.

Eine wie zuvor ausgeführte Schalldämmplatte, wobei die Schalldämmplatte in einer Anzahl horizontal trennbar ausgebildeter Abschnitte eine jeweilige auf einen Unterbau aufgelegte Platte aufweist, welche sich über einer horizontalen Ebene befindet, entlang welcher die Schalldämmplatte trennbar ausgebildet ist.

Eine wie zuvor ausgeführte Schalldämmplatte, wobei die Schalldämmplatte entlang der horizontalen Ebene geklebt oder perforiert ist.

Eine wie zuvor ausgeführte Schalldämmplatte, wobei horizontal trennbar ausgebildete Abschnitte jeweils durch eine Anzahl von Sollbruchstellen begrenzt sind.

Eine wie zuvor ausgeführte Schalldämmplatte, wobei die Schalldämmplatte flammhemmend ausgerüstet ist.

Die Erfindung umfasst des weiteren einen Fußboden, wobei in dem Fußboden eine Schalldämmplatte nach einer der vorhergehenden Ausführungsformen verbaut ist.

Ein wie zuvor ausgeführter Fußboden, wobei die Schalldämmplatte unter einem Estrich oder unter einem Fußbodenaufbau verbaut ist.

Ein wie zuvor ausgeführter Fußboden, wobei die Sollbruchstellen nach oben und/oder unten geöffnet sind.

Die Erfindung umfasst des weiteren eine Wand, wobei in der Wand eine Schalldämmplatte (10) nach einer der vorhergehenden Ausführungsformen verbaut ist.

Eine wie zuvor ausgeführte Wand, wobei die Schalldämmplatte unter einem Wandbelag verbaut ist.

Eine wie zuvor ausgeführte Wand, wobei die Wand als Installationswand ausgebildet ist.

Die Erfindung umfasst des weiteren einen Raum, wobei der Raum einen Fußboden nach einem der vorhergehenden Ausführungsformen und/oder eine Wand oder mehrere Wände nach einer der vorhergehenden Ausführungsformen aufweist.

Die Erfindung umfasst des weiteren ein Gebäude, wobei das Gebäude zumindest einen Raum nach der vorhergehenden Ausführungsform aufweist.

Die jetzt mit der Anmeldung und später eingereichten Ansprüche sind ohne Präjudiz für die Erzielung weitergehenden Schutzes.

Sollte sich hier bei näherer Prüfung, insbesondere auch des einschlägigen Standes der Technik, ergeben, dass das eine oder andere Merkmal für das Ziel der Erfindung zwar günstig, nicht aber entscheidend wichtig ist, so wird selbstverständlich schon jetzt eine Formulierung angestrebt, die ein solches Merkmal, insbesondere im Hauptanspruch, nicht mehr aufweist. Auch eine solche Unterkombination ist von der Offenbarung dieser Anmeldung abgedeckt.

Es ist weiter zu beachten, dass die in den verschiedenen Ausführungsformen beschriebenen und in den Figuren gezeigten Ausgestaltungen und Varianten der Erfindung beliebig untereinander kombinierbar sind. Dabei sind einzelne oder mehrere Merkmale beliebig gegeneinander austauschbar. Diese Merkmalskombinationen sind ebenso mit offenbart.

Die in den abhängigen Ansprüchen angeführten Rückbeziehungen weisen auf die weitere Ausbildung des Gegenstandes des Hauptanspruches durch die Merkmale des jeweiligen Unteranspruches hin. Jedoch sind diese nicht als ein Verzicht auf die Erzielung eines selbständigen, gegenständlichen Schutzes für die Merkmale der rückbezogenen Unteransprüche zu verstehen.

Merkmale, die nur in der Beschreibung offenbart wurden oder auch Einzelmerkmale aus Ansprüchen, die eine Mehrzahl von Merkmalen umfassen, können jederzeit als von erfindungswesentlicher Bedeutung zur Abgrenzung vom Stande der Technik in den oder die unabhängigen Anspruch/Ansprüche übernommen werden, und zwar auch dann, wenn solche Merkmale im Zusammenhang mit anderen Merkmalen erwähnt wurden beziehungsweise im Zusammenhang mit anderen Merkmalen besonders günstige Ergebnisse erreichen.

## Patentansprüche

1. Schalldämmplatte, aufweisend eine Mehrzahl von Sollbruchstellen, welche zum Abtrennen jeweiliger horizontal benachbarter Teile der Schalldämmplatte ausgebildet sind, wobei zumindest eine erste Sollbruchstelle (20) einen Winkel zu einer zweiten Sollbruchstelle (30) einnimmt, welcher größer als 0° ist, höchstens 90° beträgt, **dadurch gekennzeichnet, dass** die Schalldämmplatte (10) ganz oder teilweise entlang einer horizontalen Ebene (18) trennbar ausgebildet ist.

2. Schalldämmplatte nach Anspruch 1, **dadurch gekennzeichnet, dass** der Winkel 90° beträgt.

3. Schalldämmplatte nach einem der vorhergehenden Ansprüche, **dadurch gekennzeichnet, dass** die erste Sollbruchstelle (20) und/oder die zweite Sollbruchstelle (30) gerade ausgebildet ist.

4. Schalldämmplatte nach einem der vorhergehenden Ansprüche, **dadurch gekennzeichnet, dass** eine Anzahl weiterer erster Sollbruchstellen (21, 22, 23, 24, 25, 26, 27) parallel zur ersten Sollbruchstelle (20) angeordnet sind.

5. Schalldämmplatte nach einem der vorhergehenden Ansprüche, **dadurch gekennzeichnet, dass** eine Anzahl weiterer zweiter Sollbruchstellen (31, 32, 33, 34, 35, 36, 37, 38) parallel zur zweiten Sollbruchstelle (30) angeordnet sind.

6. Schalldämmplatte nach einem der vorhergehenden Ansprüche, **dadurch gekennzeichnet, dass** die Sollbruchstellen (20, 21, 22, 23, 24, 25, 26, 27, 30, 31, 32, 33, 34, 35, 36, 37, 38) entsprechend einem zweidimensionalen Muster angeordnet sind, bei welchem jeweilige Abstände zwischen benachbarten Sollbruchstellen (20, 21, 22, 23, 24, 25, 26, 27, 30, 31, 32, 33, 34, 35, 36, 37, 38) eine Mehrzahl gleicher oder unterschiedlicher Werte annehmen.

7. Schalldämmplatte nach einem der vorhergehenden Ansprüche, **dadurch gekennzeichnet, dass** die Sollbruchstellen (20, 21, 22, 23, 24, 25, 26, 27, 30, 31, 32, 33, 34, 35, 36, 37, 38) entsprechend einem zweidimensionalen Muster angeordnet sind, bei welchem jeweilige Abstände zwischen benachbarten Sollbruchstellen zu einem oder mehreren Rändern (50, 52) der Schalldämmplatte (10) hin abnehmen.

8. Schalldämmplatte nach einem der vorhergehenden Ansprüche, **dadurch gekennzeichnet, dass** die Sollbruchstellen (20, 21, 22, 23, 24, 25, 26, 27, 30, 31, 32, 33, 34, 35, 36, 37, 38) entsprechend einem zweidimensionalen Muster angeordnet sind, bei welchem jeweilige Abstände zwischen benachbarten Sollbruchstellen in einer Mehrzahl von Abschnitten jeweilige unterschiedliche Werte annehmen.

9. Schalldämmplatte nach einem der vorhergehenden Ansprüche, **dadurch gekennzeichnet, dass** ein Material, welches an einer jeweiligen Sollbruchstelle (20, 21, 22, 23, 24, 25, 26, 27, 30, 31, 32, 33, 34, 35, 36, 37, 38) zwei horizontal benachbarte Teile der Schalldämmplatte (10) verbindet, die gleiche Dichte aufweist wie Material neben der Sollbruchstelle.

10. Schalldämmplatte nach einem der vorhergehenden Ansprüche, **dadurch gekennzeichnet, dass** die Schalldämmplatte (10) aus Holzfaser ausgebildet ist und/oder die Schalldämmplatte (10) flammhemmend ausgerüstet ist.

11. Schalldämmplatte nach einem der vorhergehenden Ansprüche, **dadurch gekennzeichnet, dass** die Schalldämmplatte (10) entlang der horizontalen Ebene (18) geklebt oder perforiert ist.

12. Schalldämmplatte nach einem der vorhergehenden Ansprüche, **dadurch gekennzeichnet, dass** die Schalldämmplatte (10) in einer Anzahl horizontal trennbar ausgebildeter Abschnitte (40, 42) eine jeweilige auf einen Unterbau (12) aufgelegte Platte (14, 16) aufweist, welche sich über einer horizontalen Ebene (18) befindet, entlang welcher die Schalldämmplatte (10) trennbar ausgebildet ist.

13. Fußboden, **dadurch gekennzeichnet, dass** in dem Fußboden eine Schalldämmplatte (10) nach einem der vorhergehenden Ansprüche verbaut ist.

14. Wand, **dadurch gekennzeichnet, dass** in der Wand eine Schalldämmplatte (10) nach einem der Ansprüche 1 bis 12 verbaut ist.

15. Raum, **dadurch gekennzeichnet, dass** der Raum einen Fußboden nach Anspruch 13 und/oder eine Wand oder mehrere Wände nach Anspruch 14 aufweist.

## Claims

1. Noise attenuation panel with a multitude of predetermined breaking points designed for removing respective horizontally adjoining parts of the noise attenuation panel, wherein at least a first predetermined breaking point (20) is arranged at an angle, that is more than 0° and at the most 90°, to a second predetermined breaking point (30), **characterized in that** the noise attenuation panel (10) is configured such that it can be separated entirely or partly along a horizontal plane (18).

2. Noise attenuation panel according to claim 1, **characterized in that** the angle is 90°.

3. Noise attenuation panel according to one of the preceding claims, **characterized in that** the first predetermined breaking point (20) and/or the second predetermined breaking point (30) is configured straight.

4. Noise attenuation panel according to one of the preceding claims, **characterized in that** a number of other first predetermined breaking points (21, 22, 23, 24, 25, 26, 27) are arranged parallel to the first predetermined breaking point (20).

5. Noise attenuation panel according to one of the preceding claims, **characterized in that** a number of other second predetermined breaking points (31, 32, 33, 34, 35, 36, 37, 38) are arranged parallel to the second predetermined breaking point (30).

6. Noise attenuation panel according to one of the preceding claims, **characterized in that** the predetermined breaking points (20, 21, 22, 23, 24, 25, 26, 27, 30, 31, 32, 33, 34, 35, 36, 37, 38) are arranged according to a two-dimensional pattern where the respective spaces between adjoining predetermined breaking points (20, 21, 22, 23, 24, 25, 26, 27, 30, 31, 32, 33, 34, 35, 36, 37, 38) can take on a multitude of identical or different values.

7. Noise attenuation panel according to one of the preceding claims, **characterized in that** the predetermined breaking points (20, 21, 22, 23, 24, 25, 26, 27, 30, 31, 32, 33, 34, 35, 36, 37, 38) are arranged according to a two-dimensional pattern where the respective spaces between adjoining predetermined breaking points decrease toward one or more edges (50, 52) of the noise attenuation panel (10).

8. Noise attenuation panel according to one of the preceding claims, **characterized in that** the predetermined breaking points (20, 21, 22, 23, 24, 25, 26, 27, 30, 31, 32, 33, 34, 35, 36, 37, 38) are arranged according to a two-dimensional pattern where the respective spaces between adjoining predetermined breaking points take on respective different values in a multitude of sections.

9. Noise attenuation panel according to one of the preceding claims, **characterized in that** material connecting at a respective predetermined breaking point (20, 21, 22, 23, 24, 25, 26, 27, 30, 31, 32, 33, 34, 35, 36, 37, 38) two horizontally adjoining parts of the noise attenuation panel (10) has the same thickness as material next to the predetermined breaking point.

10. Noise attenuation panel according to one of the preceding claims, **characterized in that** the noise attenuation panel (10) is formed from wood fiber, and/or the noise attenuation panel (10) has a flame retarding finishing.

11. Noise attenuation panel according to one of the preceding claims, **characterized in that** the noise attenuation panel (10) is glued or perforated along the horizontal plane (18).

12. Noise attenuation panel according to one of the preceding claims, **characterized in that** the noise attenuation panel (10) has in a number of horizontally separable sections (40, 42) a respective panel (14, 16) that is supported on a structure (12), and the panel (14, 16) is located above a horizontal plane (18) along which the noise attenuation panel (10) is configured separably.

13. Floor, **characterized in that** in the floor a noise attenuation panel (10) according to one of the preceding claims is installed.

14. Wall, **characterized in that** in the wall a noise attenuation panel (10) according to one of the claims 1 to 12 is installed.

15. Room, **characterized in that** the room has a floor according to claim 13, and/or a wall or several walls according to claim 14.

## Revendications

1. Panneau d'isolation acoustique, comportant plusieurs lignes de rupture arrangées afin de permettre la séparation de parties horizontalement voisines du panneau d'isolation acoustique de façon à ce qu'une première ligne de rupture (20) forme un angle avec une deuxième ligne de rupture (30) supérieur à 0° et ne dépassant pas 90°, **caractérisé en ce que** le panneau d'isolation acoustique (10) peut être séparé partiellement ou intégralement le long d'un plan horizontal (18).

2. Panneau d'isolation acoustique selon la revendication 1, **caractérisé en ce que** l'angle est de 90°.

3. Panneau d'isolation acoustique selon une des revendications précédentes, **caractérisé en ce que** la première ligne de rupture (20) et/ou la deuxième ligne de rupture (30) est rectiligne.

4. Panneau d'isolation acoustique selon une des revendications précédentes, **caractérisé en ce que** plusieurs autres premières lignes de rupture (21, 22, 23, 24, 25, 26, 27) sont situées parallèlement à la première ligne de rupture (20).

5. Panneau d'isolation acoustique selon une des revendications précédentes, **caractérisé en ce que** plusieurs autres deuxièmes lignes de rupture (31, 32, 33, 34, 35, 36, 37, 38) sont situées parallèlement à la deuxième ligne de rupture (30).

6. Panneau d'isolation acoustique selon une des revendications précédentes, **caractérisé en ce que** les lignes de rupture (20, 21, 22, 23, 24, 25, 26, 27, 30, 31, 32, 33, 34, 35, 36, 37, 38) sont placées selon une grille en deux dimensions dont les distances entre les lignes de rupture voisines (20, 21, 22, 23, 24, 25, 26, 27, 30, 31, 32, 33, 34, 35, 36, 37, 38) prennent plusieurs valeurs identiques ou différentes.

7. Panneau d'isolation acoustique selon une des revendications précédentes, **caractérisé en ce que** les lignes de rupture (20, 21, 22, 23, 24, 25, 26, 27, 30 ,31, 32, 33, 34, 35, 36, 37, 38) sont placées selon une grille en deux dimensions dont les distances entre les lignes de rupture voisines diminuent vers un ou plusieurs bords (50, 52) du panneau d'isolation acoustique (10).

8. Panneau d'isolation acoustique selon une des revendications précédentes, **caractérisé en ce que** les lignes de rupture (20, 21, 22, 23, 24, 25, 26, 27, 30, 31, 32, 33, 34, 35, 36, 37, 38) sont placées selon une grille en deux dimensions dont les distances entre les lignes de rupture voisines prennent plusieurs valeurs par groupes.

9. Panneau d'isolation acoustique selon une des revendications précédentes, **caractérisé en ce qu'**un matériau liant deux parties horizontalement voisines du panneau d'isolation acoustique (10) au niveau d'une ligne de rupture (20, 21, 22, 23, 24, 25, 26, 27, 30, 31, 32, 33, 34, 35, 36, 37, 38) possède une densité identique à celui situé à côté de la ligne de rupture.

10. Panneau d'isolation acoustique selon une des revendications précédentes, **caractérisé en ce que** le panneau d'isolation acoustique (10) est formé de fibres de bois et/ou **en ce que** le panneau d'isolation est configuré de façon à retarder la combustion.

11. Panneau d'isolation acoustique selon une des revendications précédentes, **caractérisé en ce que** le panneau d'isolation acoustique (10) est collé ou perforé le long du plan horizontal (18).

12. Panneau d'isolation acoustique selon une des revendications précédentes, **caractérisé en ce que** le panneau d'isolation acoustique (10) est partagé en plusieurs parties différentes et horizontalement séparables (40, 42) formées par l'empilement des panneaux (14, 16) sur une construction de support (12) au-dessus d'un plan horizontal (18) le long duquel le panneau d'isolation acoustique (10) peut être séparé.

13. Revêtement de sol, **caractérisé en ce que** le revêtement de sol est fabriqué en intégrant un panneau d'isolation acoustique (10) selon une des revendications précédentes.

14. Mur, **caractérisé en ce que** le mur est fabriqué en intégrant un panneau d'isolation acoustique (10) selon une des revendications 1 à 12.

15. Pièce, **caractérisée en ce que** la pièce comporte un revêtement de sol selon la revendication 13 et/ou un mur ou plusieurs murs selon la revendication 14.
